Europäisches Patentamt

European Patent Office

Office européen des brevets

(11) Veröffentlichungsnummer: **0 445 375 A1**

## (12) EUROPÄISCHE PATENTANMELDUNG

(21) Anmeldenummer: 90122799.1

(22) Anmeldetag: 29.11.90

(51) Int. Cl.⁵: **H04B 3/54**, H04M 1/72, H04M 9/02, H04L 12/28

(30) Priorität: 09.03.90 DE 4008023

(43) Veröffentlichungstag der Anmeldung:
11.09.91 Patentblatt 91/37

(84) Benannte Vertragsstaaten:
AT BE CH DE DK ES FR GB GR IT LI LU NL SE

(71) Anmelder: KRONE Aktiengesellschaft
Beeskowdamm 3-11
W-1000 Berlin 37(DE)

(72) Erfinder: Kliem, Helmut, Dr.
Stölpchenweg 12E
W-1000 Berlin 39(DE)
Erfinder: Drews, Holger
Freiheitsweg 15
W-1000 Berlin 51(DE)

(54) Verfahren zur hausinternen Sprach- und Datenkommunikation über das hauseigene Stromversorgungsnetz.

(57) Das erfindungsgemäße Verfahren benutzt zwei Kanäle zur Sprach- und Datenverarbeitung, wobei die Sprachübertragung mittels Frequenzmodulation durchgeführt und zur Datenübertragung, insbesondere zur Übertragung der Wählinformation, ein Pulsmodulationsverfahren angewandt werden. Der Rufer versendet digitale Telegramme, welche die nötigen Informationen wie Art der Aktion, Quelladresse und Zieladresse enthalten. Der Angerufene reagiert mit einem Quittungstelegramm. Es wird folglich ein Handshakeverfahren benutzt. Die Telegramme werden in einfacher Weise durch Ein- und Austasten der Trägerfrequenz erzeugt. Das hauseigene Versorgungsnetz stellt einen Bus mit zwei Kanälen dar, deren Zuordnung nach einem festen Schema bei einem Zugriff auf das Netz vorgenommen wird. Mit diesem Verfahren ist ein einfacher Aufbau einer direkten Verbindung zwischen zwei Teilnehmern möglich, und es ist ein hausinternes Kommunikationsnetz einfach zu realisieren. Eine zentrale Vermittlung ist nicht erforderlich. Ein Anschluß des hausinternen Kommunikationsnetzes an das externe öffentliche Telefonnetz ist möglich.

FIG.1

EP 0 445 375 A1

Die Erfindung bezieht sich auf ein Verfahren und eine Vorrichtung zur hausinternen Sprach- und Datenkommunikation, d.h. Übertragung von Sprach- und Datensignalen, zwischen Kommunikationsendgeräten, insbesondere telefonähnlichen Geräten, auf mindestens zwei Übertragungskanälen, wobei als Informationsübertragungsmedium die hauseigenen Netzversorgungsleitungen benutzt werden. Derartige Kommunikationssysteme mit Wahlsignalisierung, die in Verbindung mit einer bekannten Familien-Telefonanlage eine eigenleitungslose kleine Nebenstellenanlage bilden, sind aus der DE 34 07 31o C 2 und DE 34 07 3o8 C2 vorbekannt.

Die dort beschriebenen Kommunikationssysteme enthalten eine Zentraladaptereinrichtung und eine oder mehrere Außenadaptereinrichtungen, die an die Netzversorgungsleitungen angekoppelt sind. Die Zentraladaptereinrichtung vermittelt zusätzlich die Kommunikation zwischen dem externen öffentlichen Telefonnetz und dem hausinternen Kommunikationsnetz über eine postmäßige Leitungsübertragungseinheit. An je einer Außenadaptereinrichtung ist ein normaler Nebenstellen-Telefonapparat angeschlossen. In der Außenadaptereinrichtung trennt eine Gabelschaltung die Anschlußleitung in je einen trägerfrequenten Sende- und Empfangskanal, die ihre jeweilige Entsprechung in der Zentraladaptereinrichtung hat. Die Sprachübertragung erfolgt durch Frequenzmodulation der Trägerfrequenz des jeweiligen Sendekanals. Die Wahlsignalisierung wird über Pilottonsender und Pilottonempfänger mit Hilfe von Wahlrelais bewerkstelligt, so daß der Aufbau einer Verbindung einer Nebenstelle mit einer zweiten über die Zentraladaptereinrichtung geschieht.

Der Erfindung liegt von daher die Aufgabe zugrunde, ein Verfahren zu entwickeln, das mit geringem Aufwand eine Sprach- und Datenübertragung auf den hauseigenen Netzversorgungsleitungen durchführt, das eine direkte Verbindung eines Teilnehmers mit einem zweiten aus einer eventuell größeren Anzahl heraus auf dem internen Hausnetz ermöglicht, und das insbesondere auf eine zentrale Vermittlungsstelle oder einen Busmaster verzichtet.

Die Lösung dieser Aufgabe ergibt sich aus den kennzeichnenden Merkmalen des Anspruches 1. Weitere vorteilhafte Ausgestaltungen der Erfindung ergeben sich aus nebengeordneten Ansprüchen 2 bis 4.

Der Kern der Erfindung besteht in einem Verfahren zur hausinternen Sprach- und Datenübertragung zwischen Kommunikationsendgeräten, insbesondere Netztelefonen, die das hauseigene Stromversorgungsnetz benutzen, wobei die Kommunikation über mindestens zwei getrennte Übertragungskanäle läuft, und wobei keine zentrale Vermittlungsstelle benötigt wird, z.B. in Form einer Zentraladaptereinrichtung. Bei der Beschränkung auf zwei Übertragungskanäle wird das hauseigene Stromversorgungsnetz als ein Bus mit zwei trägerfrequenten Kanälen ausgebildet. Das erfindungsgemäße Verfahren sieht vor, den Datenaustausch in digitaler Form mittels Pulsmodulation des Trägers vorzunehmen und die Sprachübertragung durch Frequenzmodulation durchzuführen. Der digitale Datenaustausch, der insbesondere zum Wählaufbau einer Verbindung benutzt wird, wird mittels Datentelegrammen vorgenommen. Beim Wählvorgang wird ein Handshake-Verfahren verwendet, d.h. auf ein Ruftelegramm eines Anrufes reagiert das gerufene Gerät mit einem Quittungstelegramm. Zur Durchführung des Verfahrens bekommen der Rufende und der Angerufene jeweils einen Sendekanal und einen Empfangskanal nach einem festen Schema zugeordnet. Dieses Zuordnungsschema kann z.B. daraus bestehen, daß der Rufende immer den frequenzmäßig höheren Kanal als Sendekanal und den frequenzmäßig niedrigeren Kanal als Empfangskanal belegt.

Die Telegramme besitzen eine definite Struktur. So besteht ein Telegramm aus vier Blöcken der Blocklänge $L_1$, $L_2$, $L_3$ und $L_4$ Bits. Die Blocklängen können unterschiedlich oder gleich sein. Der zuerst gesendete Block enthält immer eine Telegrammanfangskennung, z.B. bei einer Blocklänge von 4 Bit die Codierung von lolo. Die anderen drei Blöcke enthalten Informationen über die Telegrammart, die Herkunftsadresse und die Zieladresse des Telegramms. Die Telegrammart bestimmt die Art der durchzuführenden Aktion. Unter Umständen ist es nötig, vor der Übertragung des Telegramms einen Vorlaufblock mit definierter Länge zu senden, um die ruhenden anderen Teilnehmer zu aktivieren.

Das erfindungsgemäße Verfahren ist dadurch besonders vorteilhaft, daß die Datenübertragung in Form von Telegrammen mit Quittierung einen einfachen Aufbau einer Kommunikationsverbindung zwischen zwei Teilnehmern ohne zentrale Vermittlungsstelle ermöglicht. Die Teilnehmer sitzen im Ruhezustand auf dem als Bus fungierenden Versorgungsnetz und können sowohl Talker-als auch Listener-Funktionen oder nur eine davon übernehmen. Der rufende Teilnehmer übernimmt bei Absetzen eines Rufes automatisch die Rolle des Busmasters. Es ist also eine zentrale Vermittlungs- oder Steuerstelle überflüssig, d.h. dezidierter Busmaster. Das Verfahren erlaubt eine große Flexibilität im Hinblick auf zukünftige denkbare Anwendungen durch die Definition weiterer Tätigkeiten im Informationsblock Telegrammart.

Die apparative Lösung ergibt sich aus den Merkmalen des Anspruches 5. Weitere vorteilhafte Ausgestaltungen der Erfindung ergeben sich aus den weiteren Unteransprüchen.

Die erfindungsgemäße Vorrichtung, im folgenden auch Netztelefon genannt, enthält einen Netzkoppler mit integriertem Netzteil, eine Empfangsschaltung, eine Sendeschaltung, einen Microcontroller und eine Peripherie-Einheit. Besonders vorteilhaft ist, daß jedes Netztelefon durch den Microcontroller mit einer eigenen "Intelligenz" ausgestattet ist. Dieser Microcontroller übernimmt die Steuerung des gesamten Netztelefons, insbesondere steuert der Microcontroller die Kommunikation mit anderen Kommunikationsgeräten, welche insbesondere Netztelefone sein können. Durch die Übermittlung digitaler Telegramme, welche die Informationen"Telegramm-Anfangskennung, Telegrammart, Telegrammziel und Telegrammquelle"enthalten, ist ein einfacher und direkter Verbindungsaufbau möglich. Dabei wird ebenso keine zentrale Vermittlungsstelle benötigt, da das angerufene Gerät über die Information "Telegrammziel" weiß, daß es selbst angesprochen ist,und über die Information "Telegrammart" den durchzuführenden Auftrag erkennt. Durch die Information "Telegrammquelle" ist es möglich, eine Quittierung des Rufes durchzuführen.

Eine weitere vorteilhafte Ausgestaltung der Erfindung ist unter dem Stichwort "Kollisionsbetrachtungen" ersichtlich. Solange das Netz nicht belegt ist, dürfen alle Teilnehmer gleichberechtigt auf das Netz zugreifen. Ist das Netz belegt und versucht nun ein Gerät eine zweite Verbindung aufzubauen, so erhält es die Information "besetzt". Kollisionen können nur auftreten, wenn zwei Geräte innerhalb eines Zeitraumes von ca. 2o ms eine Verbindung aufbauen wollen. Es bestehen dann zwei Möglichkeiten:

    a) Der Angerufene kann wegen Telegramm-Verstümmelung nicht reagieren. Beide Anrufer erhalten ein "Besetzt"-Zeichen.

    b) Der Angerufene erkennt das ihn erreichende Telegramm und kann nun ein Antworttelegramm senden. Hat er auch die Rufadresse richtig erkannt, so wird ein Gespräch aufgebaut und der zweite Rufer erhält ein "Besetzt"-Zeichen.

Hat der Angerufene die Ruf-Adresse nicht richtig erkannt, so tritt Fall a) ein. Kollisionen auf dem hausinternen Netz können also sicher aufgelöst werden.

Ein weiterer Vorteil der Erfindung wird darin gesehen, daß die Vorrichtung eine große Flexibilität im Hinblick auf künftige denkbare Anwendungen durch die Definition z.B. weiterer Tätigkeiten im Informationsblock "Telegrammart" oder durch Erweiterung der Telegramme mit zusätzlichen Informationsblöcken erlaubt.

Das rufende Gerät belegt einen Sendekanal und einen Empfangskanal nach einem beliebigen, aber festen Schema, das so festgelegt sein kann, daß der rufende Teilnehmer immer den höherfrequenten Kanal als Sendekanal und den niedrigquenten Kanal als Empfangskanal belegt. Das bedeutet, daß dann der Gerufene automatisch die niedrige Frequenz als Sendekanal und die höhere Frequenz als Empfangskanal benutzt. Im Ruhezustand hören alle Geräte bei diesem Belegungsschema immer auf der höheren Frequenz als Empfangskanal Der Empfangs- und der Sendekanal jedes Gerätes sind somit frequenzmäßig umschaltbar. Das einmal fest definierte Belegungsschema der Kanäle zusammen mit dem Telegrammsystem erlaubt es, ein Gespräch direkt von einem Gerät zu einem anderen aufzubauen, ohne daß eine zentrale Vermittlungsstelle mit einem Pilotton-Wählsystem benötigt wird.

Es ergibt sich in einfacher Weise eine interne Hauskommunikationsalage bei der Verwendung mindestens zweier erfindungsgemäßer Vorrichtungen.

Die Erfindung ist im folgenden anhand einer bevorzugten Ausführungsform eines Netztelefones näher beschrieben.

Es zeigen:

    Fig. 1     ein Blockschaltbild des Netztelefones,

    Fig. 2     ein Blockschaltbild einer hausinternen Nebenstellenanlage auf dem hauseigenen Stromversorgungsnetz und

    Fig. 3     ein Netzinterface zum Anschluß der hausinternen Telefonanlage an das externe Telefonnetz.

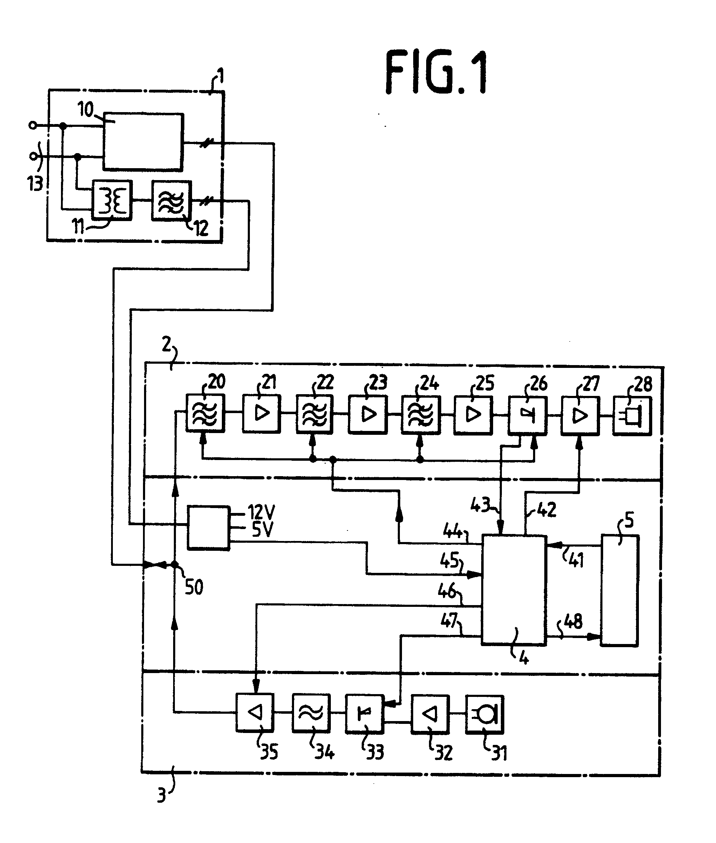

Die Fig. 1 zeigt ein Blockschaltbild eines Netztelefones, das zu einem hausinternen Gebrauch über das hauseigene Stromversorgungsnetz bestimmt ist. Es besteht aus fünf Funktionsgruppen: Einem Netzkoppler 1, einem Empfangsteil 2, einem Sendeteil 3, einem Microcontroller 4 und einer Peripherieeinheit 5, wobei der Netzkoppler 1 von den in einem Handapparat vereinten anderen Komponenten getrennt und über ein vieradriges Kabel mit dem Handapparat verbunden ist. Der Netzkoppler 1 enthält einen Netztransformator 1o mit einem Gleichrichter. Die Netzspannung wird auf eine Niederspannung von 15 Volt herabtrandformiert und in eine pulsierende Gleichspannung verwandelt. Diese wird anschließend im Handapparat auf die nötigen Betriebsgleichspannungen 12 Volt und 5 Volt herabgesetzt und stabilisiert. Die pulsierende Gleichspannung wird außerdem dem Microcontroller 4 über den Eingang 45 zugeführt, da diese die Informationen über den Nulldurchgang der Netzspannung enthält. Diese Nulldurchgangsinformationen werden zu Synchronisierzwecken der Telegrammübermittlung und des Telegrammempfanges benötigt. Der Netzkoppler 1 ist mit einem Schukostecker an das Netz 13 anschließbar.

Das Empfangsteil 2 des Netztelefons besteht aus einer Kette dreier Bandfilter,2o, 22 und 24, denen jeweils Verstärker 21, 23 und 25 nachgeschaltet sind. Das gefilterte und verstärkte FM-Signal wird einem Demodulator 26 zugeführt. Von dort geht das in Basisbandlage zurückgewandelte Sprachsignal in einen Verstärker 27 und wird auf einer Hörkapsel 28 ausgegeben. Der Demodulator 26 hat einen zweiten Ausgang, über den die detektierte Trägerfrequenz dem Eingang des Microcontrollers 4 zugeführt wird. Die Bandfilter 2o, 22 und 24 und der Demodulator 26 sind vom Microcontroller 4 über dessen Ausgang 44 in ihrer Mittenfrequenz zwischen 1o9 KHz und 131 KHz umschaltbar. Weiterhin ist der Hörkapselverstärker 27 vom Microcontroller 4 über dessen Ausgang 42 ein- und ausschaltbar. Damit wird das Sprachsignal erst dann auf die Hörkapsel 28 geschaltet, wenn der Telegrammaustausch beendet und die Verbindung aufgebaut ist.

Der Sendeteil 3 enthält in Signalflußrichtung betrachtet eine Sprechkapsel 31 mit einem nachfolgenden Sprachsignalverstärker 32. Der Sprachsignalverstärker 32 besitzt eine Übertragungsfunktion mit einem Durchlaßbereich von 3oo Hz bis 3,4 KHz. Das verstärkte und bandbegrenzte Sprachsignal in Basisbandlage wird durch einen Modulator 33 in ein frequenzmoduliertes Signal umgesetzt. Der Modulator 33 erzeugt dabei ein rechteckförmiges FM-Signal. Dieses FM-Signal wird einem Tiefpaßfilter 34 zugeführt und anschließend im Senderverstärker 35 verstärkt. Der Tiefpaß 34 verwandelt das Signal in ein oberwellenfreies sinusförmiges FM-Signal. Der Sendeteil 3 und der Empfangsteil 2 sind im Punkt So zusammengeführt und dort mit dem Netzkoppler 1 verbunden. Die Trägerfrequenz des Modulators 33 wird vom Microcontroller 4 über dessen Ausgang 47 eingestellt. Des weiteren ist der Sendeverstärker 35 vom Microcontroller 4 über den Ausgang 46 ein- und ausschaltbar. Somit können die digitalen Telegramme durch Ein- und Austasten der Trägerfrequenz vom Microcontroller 4 her erzeugt werden.

Der Microcontroller 4 kontrolliert das gesamte Netztelefon und führt folgende Funktionen aus:

- Ein- und Ausschalten von Sender und Empfänger;
- Durchführung der Kanalzuordnung (Umschaltung von Senderfrequenz und Empfänger-Filter auf die entsprechenden Kanäle);
- Erzeugung der Wählsignale;
- Erkennung der eigenen Rufnummer;
- Erzeugung des Weckersignals und des Frei- und Besetztzeichens.

Außer den bereits in ihrer Bedeutung beschriebenen Ein- und Ausgängen 42 bis 47 des Microcontrollers 4 sind ein weiterer Eingang 41 für Eingaben der Peripherieeinheit 5 an den Microcontroller 4 und ein weiterer Ausgang 48 für Ausgaben des Microcontrollers 4 an die Peripherieeinheit 5 vorhanden.

Die Peripherieeinheit 5 umfaßt eine Tastatur zur Erzeugung der Wählinformation oder anderer Informationen, wie z.B. Eingabe einer neuen eigenen Telefonnummer, einen Gabelauflagekontakt für die Information, ob der Hörer abgenommen worden ist oder nicht, und einen Summer zur Erzeugung des Wecksignals. In der jetzigen Konfiguration mit einer Blocklänge von 4 Bit für die Telegramminformation "Telegrammquelle" kann als Telefonnummer eines Netztelefones eine beliebige Zahl von 1 bis 9 eingegeben werden. Somit ist eine Maximalzahl von 9 Teilnehmern in einem Hausnetz möglich. Größere Teilnehmerzahlen können durch Verlängern der Blocklängen des Telegramms erreicht werden.

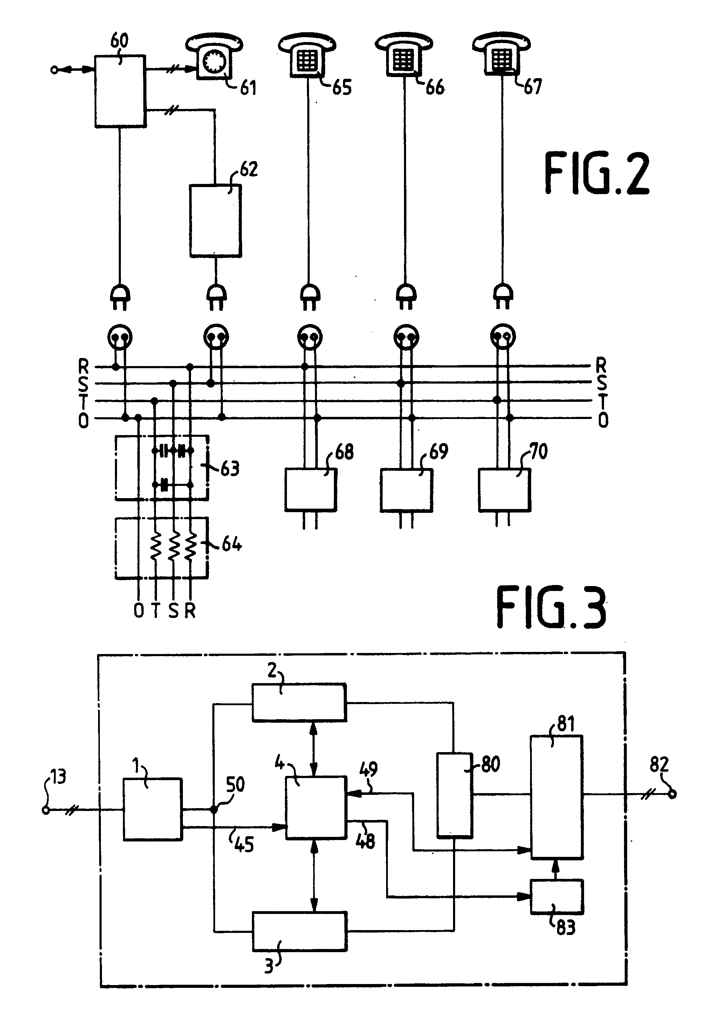

In Fig. 2 ist die Kopplung eines internen Hauskommunikationsnetzes über das Stromversorgungsnetz mit dem externen öffentlichen Telefonnetz dargestellt. Im dargestellten Beispiel besteht das interne Hauskommunikationsnetz aus den Netztelefonen 65, 66 und 67, die mit dem hauseigenen Stromversorgungsnetz verbunden sind. Da die Netztelefone an verschiedenen Phasen des Hausnetzes angeschlossen sein können, sind durch einen Phasenkoppler 63 die Phasen R, S und T hochfrequenzmäßig überbrückt. Damit Gespräche innerhalb eines Hauses nicht von außen mitgehört werden können, ist am Übergang des Hausnetzes zu dem externen Stromverteilungsnetz eine Trägerfrequenzsperre 64 vorgesehen. Es ist möglich, daß Hausgeräte, die ebenfalls am hauseigenen Stromversorgungsnetz angeschlossen sind, einen hochfrequenzmäßigen Kurzschluß einzelner Phasen nach Masse verursachen können. Daher müssen derartige Hausgeräte mit Entstörfiltern 68, 69 und 7o ausgestattet werden.

Der Übergang von einem Hausnetz in das öffentliche Telefonnetz wird von einem Netzinterface 62 bewerkstelligt, da es einerseits an das hauseigene Stromnetz angeschlossen und andererseits mit einer Leitungsanschlußeinheit 6o verbunden ist, die mindestens einen Hauptanschluß des öffentlichen Telefonnetzes aufweist. Die Leitungsanschlußeinheit 6o weist mindestens einen Handapparat 61 auf. Mit einer derartigen Konfiguration ist eine Nebenstellenanlage realisiert.

Die Fig. 3 zeigt ein Prinzipschaltbild eines Netzinterfaces. Dargestellt ist ein Netzanschluß 13, der in den Netzkoppler 1 führt. Im Punkt 5o sind der Empfangsteil 2 und der Sendeteil 3 miteinander verbunden. Der Sendeteil 3 und der Empfangsteil 2 werden vom Microcontroller 4 in der bei den Netztelefonen beschriebenen Weise beeinflußt. Zur Synchronisation enthält der Microcontroller 4 die pulsierende Gleichspannung vom Netzkoppler 1 über den Eingang 45 zugeführt. Der Empfangsteil 2 und der Sendeteil 3 führen in eine Gabelschaltung 8o, die mit einer Externanpassung 81 verbunden ist, die auf die Nebenanschlußleitung 82 führt. Zur Umsetzung der Wählinformation des hausinternen Kommunikationsverfahrens mittels Informationsübertragung der Adresse in einem digitalen Telegramm bei einem gleichberechtigten Teilnehmerbetrieb in das Wählverfahren des öffentlichen Telefonnetzes steuert der Microcontroller 4 einen Relaistreiber 83, der auf die Externanpassung 81 wirkt und dort das benötigte öffentliche Wählverfahren initiert. Zur Umsetzung der Wählinformation aus dem öffentlichen Telefonnetz in das interne hauseigene Kommunikationsnetz wird die Wählinformation von der Externanpassung 81 über den Eingang 49 dem Microcontroller zugeführt, der diese Information in entsprechende Ruftelegramme umsetzt.

In einer nicht näher dargestellten Ausführungsform erfolgt die Sprachübertragung in digitaler Form, indem zwischen dem Sprachsignalverstärker 32 und dem Modulator 33 ein A/D-Wandler und zwischen dem Demodulator 26 und dem Verstärker 27 ein D/A-Wandler geschaltet werden. Das vom Modulator 33 abgegebene modulierte digitale Sprachsignal entsteht durch Frequenzumtastung der Trägerfrequenzschwingung.

**Patentansprüche**

1. Verfahren zur hausinternen Sprach- und Datenkommunikation zwischen Kommunikationsendgeräten über das hauseigene Stromversorgungsnetz, mit mindestens zwei Übertragungskanälen, wobei die Sprachkommunikation mittels Frequenzmodulation durchgeführt wird, **dadurch gekennzeichnet,** daß die Datenkommunikation zwischen den Kommunikationsendgeräten, insbesondere die Information für den Verbindungsaufbau, in digitaler Form mittels Pulsmodulation durchgeführt wird und daß die Datenkommunikation zwischen den Kommunikationsendgeräten und dem als Bus, bestehend aus zwei Kanälen, fungierenden hausinternen Stromversorgungsnetz durch digitale Telegramme im Handshake-Verfahren abgewickelt wird.

2. Verfahren nach Anspruch 1, dadurch gekennzeichnet, daß bei Verwendung zweier Übertragungskanäle jeweils ein Kanal dem Rufer und ein Kanal dem Angerufenen als Sendekanal zugeordnet wird.

3. Verfahren nach Anspruch 2, dadurch gekennzeichnet, daß die Übertragungskanäle 1o9 KHz und 131 KHz für Signale mit einem maximalen Frequenzhub von $\Delta F = 3,5$ KHz benutzt werden und daß dem rufenden Teilnehmer der Kanal mit der Frequenz 131 KHz und dem gerufenen Teilnehmer der Kanal mit der Frequenz 1o9 KHz jeweils als Sendekanäle zugeordnet werden.

4. Verfahren nach Anspruch 1 und 2, dadurch gekennzeichnet, daß die digitalen Telegramme durch Ein- und Austasten der Trägerfrequenz des jeweiligen Sendekanals erzeugt werden, und daß Satz eines Telegramms aus vier Blöcken mit den Blocklängen $L_1, L_2, L_3, L_4$ besteht, wobei im vorderen Block eine Telegrammanfangskennung gesendet wird, während die anderen drei Blöcke, deren Reihenfolge beliebig aber fest ist, die Informationen "Telegrammart, Telegrammquelle und Telegrammziel" enthalten, und im Bedarfsfall vor dem Telegramm ein Vorlaufblock der Länge $L_0$ gesendet wird.

5. Vorrichtung zur hausinternen Sprach- und Datenkommunikation zwischen Kommunikationsendgeräten über das hauseigene Stromversorgungsnetz, wobei die Sprachkommunikation mittels Frequenzmodulation der Trägerfrequenz des Sendekanals erfolgt, dadurch gekennzeichnet, daß die Vorrichtung einen Netzkoppler (1) mit Netzteil, einen Sendekanal (3), einen Empfangskanal (2) und einen Microcontroller (4) mit Netzcontroller enthält, der die Steuerung der Vorrichtung und den Aufbau der Kommunikationsverbindung mit anderen Kommunikationsendgeräten durch den Austausch von digitalen Telegrammen mit Quittungsbetrieb durchführt und dabei die Telegramme mittels Pulsmodulation überträgt.

6. Vorrichtung nach Anspruch 5, dadurch gekennzeichnet, daß das digitale Telegramm durch Ein- und Austasten der Trägerfrequenz des jeweiligen Sendekanals erzeugt wird, ein Telegrammsatz aus vier Blöcken mit den Blocklängen $L_1, L_2, L_3, L_4$ besteht, wobei der vordere Block eine Telegrammanfangskennung enthält, während die anderen drei Blöcke, deren Reihenfolge beliebig aber fest ist, die Informationen, Telegrammart, Telegrammquelle und Telegrammziel enthalten und sich im Bedarfsfall zusätzlich vor dem Telegramm ein Vorlaufblock der Länge $L_0$ befindet.

7. Vorrichtung nach ANspruch 6, dadurch gekennzeichnet, daß der Vorlaufblock eine Länge $L_0$ von 24 Bit hat, die auf logisch 1 gesetzt sind, und das Telegramm eine Länge von 16 Bit hat, wobei die vier Telegrammblöcke jeweils eine Länge von 4 Bit aufweisen.

8. Vorrichtung nach Anspruch 6, dadurch gekennzeichnet, daß der Empfangskanal (2) Bandfilter (2o, 22, 24 ) mit jeweils nachgeschalteten Verstärkern (21, 23, 25 ) enthält, das daraus resultierende Signal einem Demodulator (26) zugeführt wird, wobei die digitalen Telegramme direkt dem Microcontroller (4) über eine Leitung (43) und die in die Basisbandlage rückgewandelten Sprachsignale über einen Verstärker (27) der Hörkapsel (28) zugeführt werden.

9.  Vorrichtung nach Anspruch 6, dadurch gekennzeichnet, daß der Sendekanal (3),in Signalflußrichtung betrachtet, aus der Sendekapsel (31), einem nachfolgenden ersten Sendeverstärker (32), dem Modulator (33), der die Umsetzung des Sprachsignals in die Trägerfrequenzlage bewerkstelligt, einem nachfolgenden Tiefpaßelement (34) und einem zweiten Sendeverstärker (35) besteht, der vom Microcontroller (4) über eine Leitung (47) ein- und ausschaltbar ist.

10. Vorrichtung nach Anspruch 8 und 9, dadurch gekennzeichnet, daß die Bandfilter (2o,22,24), der Demodulator (26) des Empfangskanals und der Modulator (33) des Sendekanals (3) vom Microcontroller (4) aus über zwei Leitungen (44,47) in ihrer Frequenz umschaltbar sind und je nachdem ob die Vorrichtung als Rufer, was einer Sendemittenfrequenz von 131 KHz und Empfangsmittenfrequenz von 1o9 KHz entspricht, oder als Angerufener, was einer Sendemittenfrequenz von 1o9 KHz und einer Empfangsmittenfrequenz von 131 KHz entspricht, betrieben werden.

11. Vorrichtung nach Anspruch 9, dadurch gekennzeichnet, daß der Microcontroller (4) Eingänge für die Telegrammerkennung(43), Tastatur (41) einschließlich Hörerauflagekontakt, Nulldurchgangserkennung (45) der Netzspannung und die Ausgänge für den Empfänger Ein/Aus (42), Summer (48), Umschaltung Empfängerfrequenz (44), Umschaltung Senderfrequenz (47) und Sender Ein/Aus (46) besitzt, die Kontrolle über die gesamte Vorrichtung hat und die Funktionen Ein- und Ausschalten von Senderverstärker (35) und Empfängerverstärker (27), Durchführung der Kanalzuordnung, Erzeugung der Wählsignale, Erkennung der eigenen Rufnummer und Erzeugung des Weckersignals (48) samt Frei- bzw. Besetztzeichen ausführt.

12. Vorrichtung nach ANspruch 9 und 11, dadurch gekennzeichnet, daß der Modulator (33) eine rechteckförmige frequenzmodulierte Ausgangsspannung erzeugt, die durch den nach dem Sendeverstärker (35) angeordneten Tiefpaß (34) in eine sinusförmige Ausgansspannung der jeweiligen Sendeträgerfrequenz umgewandelt wird, wobei die Trägerfrequenz vom Microcontroller (4) am Modulator (33) über den Ausgang (47) bestimmt wird.

13. Vorrichtung nach Anspruch 12, dadurch gekennzeichnet, daß Sende-und Empfangskanal zusammengeführt und die Signale über einen Bandpaß ( 12 ) im Steckernetzteil ( 1 ) mittels einer induktiven HF-Kopplung ( 11 ) auf das Stromnetz übertragen werden, wobei sich im Steckernetzteil ( 1 ) ein Netztransformator ( 10 ) mit einem Gleichrichter befindet, der eine pulsierende gleichgerichtete Niederspannung erzeugt, die geglättet und auf die nötigen Betriebsspannungen stabilisiert wird, wobei die pulsierende Gleichspannung außerdem dem Microcontroller ( 4 ) zur Bestimmung des Nulldurchgangs der Netzspannung zugeführt wird, um eine Synchronisation für die Datenübertragung bei der Pulsmodulation zu ermöglichen.

14. Vorrichtung nach Anspruch 13, dadurch gekennzeichnet, daß die Rufsendung mittels Pulsmodulation durch Ein- und Austasten des Sendeverstärkers ( 35 ) durch den Microcontroller ( 4 ) über den Ausgang ( 46 ) erfolgt.

15. Vorrichtung nach Anspruch 13, dadurch gekennzeichnet, daß die Ruferkennung im Microcontroller ( 4 ) durch Abtastung der Datensignale im Takt der Nulldurchgänge der Netzfrequenz erfolgt, wobei die Datensignale dem Microcontroller ( 4 ) vom Demodulator ( 26 ) über den Eingang ( 43 ) zugeführt werden.

16. Vorrichtung nach einem oder mehreren der Ansprüche 5 bis 15, dadurch gekennzeichnet, daß durch eine Kopplung des Stromversorgungsnetzes und mindestens eines Netztelefons über ein Interface ( 62 ) an eine Leitungsanschlußübertragungseinheit ( 60 ) ein Übergang zwischen internem Hausnetz und dem externem Telefonnetz erreicht und eine Nebenstellenanlage realisiert wird.

17. Vorrichtung nach Anspruch 16, dadurch gekennzeichnet, daß das Interface ( 62 ) aus einer Netzkoppeleinheit ( 1 ) inklusive Netzteil, einem Empfangskanal ( 2 ), einem Sendekanal ( 3 ), einem Microcontroller ( 4 ), einer Gabelschaltung ( 80 ), einer Externanpassung ( 81 ) und einem Relaistreiber ( 82 ) besteht, wobei die Netzkoppeleinheit ( 1 ) in Punkt ( 5 ) mit dem Sendekanal ( 3 ) und dem Empfangskanal ( 2 ) verbunden ist, der Microcontroller ( 4 ) die Gerätesteuerung übernimmt, über den Eingang ( 45 ) die Nulldurchgangsdetektion vornimmt und das Sende-und Empfangsteil ( 2,3 ) steuert, der Sende-und Empfangskanal ( 2,3 ) auf eine Gabelschaltung ( 80 ) zusammengeführt sind und diese Gabelschaltung ( 80 ) mit einer Externanpassung ( 81 ) verbunden ist, die über die Nebenanschlußleitung ( 82 ) an eine Leitungübertragungseinheit, die den Anschluß an das externe öffentliche Telefonnetz darstellt, geführt ist, wobei die Wählinformation bei einem Verbindungsaufbau vom internen Hausnetz in das öffentliche Telefonnetz hinein von dem Microcontroller ( 4 ) über den Ausgang ( 48 ) auf den Relaitreiber ( 82 ) gegeben wird, der das übliche Wählverfahren in der Externanpassung ( 81 ) initiiert, während in der anderen Wählrichtung die Wählinformation von der Externanpassung ( 81 ) über den Eingang ( 49 ) dem Microcontroller ( 4 ) zugeführt wird, der sie in ein entsprechendes Telegramm umsetzt.

18. Vorrichtung nach einem oder mehreren Ansprüchen 5 bis 17, dadurch gekennzeichnet, daß die Sprachübertragung in digitaler Form erfolgt, indem zwischen dem Sprachsignalverstärker ( 32 ) und dem Modulator ( 33 ) ein A/D-Wandler und zwischen Demodulator ( 26 ) und Verstärker ( 27 ) ein D/A-Wandler geschaltet werden, wobei das vom Modulator(33)-abgegebene modulierte digitale Sprachsignal durch Frequenzumtastung der Trägerfrequenzschwingung entsteht.

# FIG.1

FIG.2

FIG.3

**Europäisches
Patentamt**

**EUROPÄISCHER
RECHERCHENBERICHT**

Nummer der Anmeldung

**EP 90 12 2799**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | EP-A-0 128 416   (SIEMENS)<br>* Seite 2, Zeile 13 - Seite 3, Zeile 27; Figur 1 * * Anspruch 1 *<br>– – – | 1,2,4-6,8,<br>9,11,7,12,<br>13-15 | H 04 B 3/54<br>H 04 M 1/72<br>H 04 M 9/02<br>H 04 L 12/28 |
| Y,A | WO-A-8 911 186   (TANDY)<br>* Seite 6, Zeile 8 - Seite 11, Zeile 14 *<br>– – – | 1,2,4-6,8,<br>9,11,3,7,<br>10,12,13 | |
| A | US-A-4 479 033   (BROWN ET AL.)<br>* Zusammenfassung; Figur 1 *<br>– – – – – | 1-3,5,9,<br>13,16,17 | |

| RECHERCHIERTE SACHGEBIETE (Int. Cl.5) |
|---|
| H 04 B<br>H 04 L<br>H 04 M |

Der vorliegende Recherchenbericht wurde für alle Patentansprüche erstellt

| Recherchenort | Abschlußdatum der Recherche | Prüfer |
|---|---|---|
| Den Haag | 23 April 91 | MIKKELSEN C. |

KATEGORIE DER GENANNTEN DOKUMENTE

X : von besonderer Bedeutung allein betrachtet ·
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
---------------------------------------------------
& : Mitglied der gleichen Patentfamilie, übereinstimmendes Dokument